# EUROPEAN PATENT APPLICATION

(11) **EP 4 567 986 A1**
(43) Date of publication of application: **11.06.2025**
(21) Application number: 22955324.3
(22) Date of filing: 18.08.2022
(51) Int. Cl.: H01M 50/242

(54) **BATTERY AND ELECTRICAL DEVICE**

(71) Applicant: Contemporary Amperex Technology Co., Limited, Ningde, Fujian 352100 (CN)
(72) Inventor: HE, Runyong, Ningde, Fujian 352100 (CN); WANG, Peng, Ningde, Fujian 352100 (CN); CHEN, Xingdi, Ningde, Fujian 352100 (CN); YAO, Pengcheng, Ningde, Fujian 352100 (CN); ZHANG, Wenhui, Ningde, Fujian 352100 (CN)
(74) Representative: Ziebig Hengelhaupt Intellectual Property Attorneys Patentanwaltskanzlei PartGmbB
(86) International application number: PCT/CN2022/113172
(87) International publication number: WO 2024/036543

(57) **Abstract**

The present application relates to a battery and an electrical apparatus. The battery comprises: a frame body, a hollow region being formed in an internal structure of the frame body; a bearing body mated to the frame body; and a battery unit arranged in the hollow region and spaced apart from the frame body. The battery unit is arranged on one side of the bearing body along a thickness direction of the frame body, and the battery unit is connected to the bearing body. The battery and the electrical apparatus provided in the present application can effectively improve the safety of the battery so that the battery has a lower potential safety hazard.

## Description

### TECHNICAL FIELD

The present application relates to the technical field of batteries, and more particularly to a battery and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, battery technology is an important factor related to their development.

In some cases, the batteries are not very safe during transportation or use, posing a significant potential safety hazard.

### SUMMARY OF THE INVENTION

In view of the above problems, the present application provides a battery and an electrical apparatus, which can effectively improve the safety of the battery so that the battery has a lower potential safety hazard.

In a first aspect, the present application provides a battery, including:
a frame body, a hollow region being formed in an internal structure of the frame body;
a bearing body mated to the frame body; and
a battery unit arranged in the hollow region and spaced apart from the frame body, the battery unit being arranged on one side of the bearing body along a thickness direction of the frame body, and the battery unit being connected to the bearing body.

In the present application, when the battery unit is arranged in the hollow region, the bearing body can limit and fix the battery unit along the thickness direction of the frame body to meet the requirements of assembly of the battery unit. In addition, the battery unit is spaced apart from the frame body, which can greatly reduce the possibility of the battery unit colliding with the frame body and becoming deformed during transportation and use, thereby reducing the risk of deformation or even explosion of the battery unit, so that the battery can have higher safety performance.

In some embodiments, the frame body includes a first longitudinal beam and a second longitudinal beam spaced apart along its width direction, and a first transverse beam and a second transverse beam spaced apart along its length direction. The first longitudinal beam, the first transverse beam, the second longitudinal beam, and the second transverse beam are connected end to end in sequence and enclosed to form the hollow region.

Since a battery unit is generally a cuboid or cylinder, by providing a rectangular hollow region, the hollow region can be fully utilized and a battery unit of a greater volume can be arranged in the hollow region, so that the battery can have higher space utilization.

In some embodiments, the battery unit is arranged between and spaced apart from the first longitudinal beam and the second longitudinal beam, and the battery unit is arranged between and spaced apart from the first transverse beam and the second transverse beam.

With this design, collisions caused by relative movement between the battery unit and the frame body can be prevented, thereby ultimately achieving the aim of improved battery safety.

In some embodiments, the distance between the battery unit and the first transverse beam is Y₁, and the distance between the battery unit and the second transverse beam is Y₂, where Y₁ satisfies the condition: 30 mm ≤ Y₁ ≤ 250 mm, and/or Y₂ satisfies the condition: 30 mm ≤ Y₂ ≤ 250 mm.

In such a range of distances, the battery unit can be prevented from colliding with the first transverse beam and/or the second transverse beam, so that the battery has better safety.

In some embodiments, Y₁ satisfies the condition: 50 mm ≤ Y₁ ≤ 120 mm, and/or Y₂ satisfies the condition: 50 mm ≤ Y₂ ≤ 120 mm.

In such a range of distances, the battery unit can be prevented from colliding with the first transverse beam and/or the second transverse beam, and the distance between the battery unit and the first transverse beam and/or the second transverse beam is not too large, so that the battery can have better space utilization and safety.

In some embodiments, the distance between the battery unit 13 and the first longitudinal beam 112 is X₁, and the distance between the battery unit 13 and the second longitudinal beam 113 is X₂, where X₁ satisfies the condition: 30 mm ≤ X₁ ≤120 mm, and/or X₂ satisfies the condition: 30 mm ≤ X₂ ≤120 mm.

In such a range of distances, the battery unit can be prevented from colliding with the first longitudinal beam and/or the second longitudinal beam, so that the battery can have better safety.

In some embodiments, X₁ satisfies the condition: 35 mm ≤ X₁ ≤80 mm, and/or X₂ satisfies the condition: 35 mm ≤ X₂ ≤80 mm.

In such a range of distances, the battery unit can be prevented from colliding with the first longitudinal beam and/or the second longitudinal beam, and the distance between the battery unit and the first longitudinal beam and/or the second longitudinal beam is not too large, so that the battery can have better space utilization and safety.

In some embodiments, a cover body connected to the frame body is further included, the cover body being provided on the side of the battery unit facing away from the bearing body.

The bearing body has a bearing surface facing the battery unit, and a projection of the cover body on the bearing surface at least partially covers a projection of the battery unit on the bearing surface.

By setting the projection of the cover body on the bearing surface to at least partially cover the projection of the battery unit on the bearing surface, the cover body can be located below the battery unit and seal at least part of the hollow region, thereby helping to reduce the interference with the battery unit from the external environment where the battery is located.

In some embodiments, the projection of the cover body on the bearing surface completely covers the projection of the battery unit on the bearing surface.

In this way, the cover body can further reduce the interference with the battery unit from the external environment where the battery is located.

In some embodiments, the cover body cooperates with the bearing body and is configured to seal the battery unit within the hollow region.

The battery unit sealed within the hollow region cannot come into contact with water vapor, air, and other substances in the external environment, thereby preventing interference with the operation of the battery unit from the external environment, so that the battery unit can have better operating reliability and service life.

In a second aspect, the present application provides an electrical apparatus including the battery according to any one of the above embodiments, where the battery is configured to provide electric energy for the electrical apparatus.

In order to more clearly illustrate the technical solutions of the embodiments of the present application, the drawings to be used in the embodiments of the present application will be described briefly below. Obviously, the drawings described below depict merely some embodiments of the present application. For those skilled in the art, other drawings can also be obtained based on these drawings without any creative effort.

### BRIEF DESCRIPTION OF DRAWINGS

In order to more clearly illustrate the technical solutions of the embodiments of the present application, the drawings to be used in the embodiments of the present application will be described briefly below. Obviously, the drawings described below depict merely some embodiments of the present application. For those skilled in the art, other drawings can also be obtained based on these drawings without any creative effort. In the drawings:
FIG. 1 is a schematic structural view of a vehicle according to some embodiments of the present application;
FIG. 2 is a schematic structural view of a battery according to some embodiments of the present application;
FIG. 3 is a top view of the battery shown in FIG. 2 with a bearing body removed;
FIG. 4 is a front sectional view of the battery shown in FIG. 3;
FIG. 5 is a side sectional view of the battery shown in FIG. 4; and
FIG. 6 is a schematic plan view of a frame body in a battery mated to the battery according to some embodiments of the present application.

Description of reference numerals:
100. Vehicle; 10. Battery; 11. Frame body; 111. Hollow region; 112. First longitudinal beam; 113. Second longitudinal beam; 114. First transverse beam; 115. Second transverse beam; 12. Bearing body; 121. Bearing surface; 13. Battery unit; 14. Cover body; 20. Controller; 30. Motor.

### DETAILED DESCRIPTION

To make the above objectives, features, and advantages of the present application more obvious and understandable, some specific embodiments of the present application are described in detail below with reference to the drawings. In the following description, numerous specific details are set forth in order to provide thorough understanding of the present application. However, the present application can be implemented in many ways other than those described herein, and those skilled in the art can make similar improvements without violating the content of the present application. Therefore, the present application is not limited to the specific embodiments disclosed below.

In the description of the present application, it is to be understood that the orientation or positional relationships indicated by the terms "central," "longitudinal," "transverse," "length," "width," "thickness," "upper," "lower," "front," "rear," "left," "right," "vertical," "horizontal," "top," "bottom," "inner," "outer," "clockwise," "anticlockwise," "axial," "radial," "circumferential," and the like are based on the orientation or positional relationships shown in the drawings and are intended only for facilitating the description of the present application and simplifying the description, rather than indicating or implying that the apparatus or element referred to must have a particular orientation or be constructed and operated in a particular orientation, and therefore shall not be interpreted as limitation of the present application.

In addition, the terms "first" and "second" are used for descriptive purposes only, and cannot be construed as indicating or implying relative importance or implicitly indicating the number of technical features indicated. Therefore, a feature defined by "first" or "second" may expressly or implicitly include at least one of the features. In the description of the present application, the meaning of "a plurality of" is at least two, for example two or three, unless otherwise explicitly and specifically defined.

In the present application, unless otherwise expressly specified and limited, the terms "mount," "link," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements, unless otherwise specifically defined. For those of ordinary skill in the art, the specific meanings of the above terms in the present application can be understood according to specific situations.

In the present application, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below," "underneath" or "under" the second feature may be a case that the first feature is directly underneath or obliquely underneath the second feature, or only means that the level of the first feature is lower than that of the second feature.

It should be noted that when an element is referred to as "fixed to" or "arranged to" another element, it may be directly on the other element or there may be an intermediate element. When one element is considered to be "connected" to another element, it may be directly connected to another element or there may also be an intermediate element. The terms "vertical," "horizontal," "upper," "lower," "left," "right", and similar expressions used herein are intended for illustrative purposes only, and do not indicate that they are the only implementations.

At present, from the development of market situation, the application of batteries is becoming more and more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of batteries, the market demand is also constantly expanding.

The applicant noted that batteries are not very safe during transportation or use, posing a significant potential safety hazard. After careful research, the applicant found that the main cause for the low safety is that during transportation and use, the battery unit in the battery is prone to collision with the frame body in the battery, causing the battery unit to deform or even explode.

In order to alleviate the problem of low battery safety, the applicant has designed a battery after in-depth research. The battery includes a frame body, a bearing body, and a battery unit. A hollow region is formed in the internal structure of the frame body. The bearing body is mated to the frame body. The battery unit is provided in the hollow region and spaced apart from the frame body. The battery unit is arranged on one side of the bearing body along a thickness direction of the frame body, and the battery unit is connected to the bearing body. In such a battery, since the battery unit is spaced apart from the frame body, the possibility of the battery unit colliding with the frame body and becoming deformed during transportation and use of the battery can be greatly reduced, thereby reducing the risk of deformation or even explosion of the battery unit, so that the battery can have higher safety performance.

The battery disclosed in the embodiments of the present application can be used, without limitation, in an electrical apparatus such as a vehicle, a ship, or an aircraft. A power source system of the electrical apparatus may be composed of the battery and the like disclosed in the present application, which is beneficial to alleviating and automatically adjusting deterioration of expansion force of the battery core, replenishing the electrolyte consumed, and improving the stability of battery performance and prolonging the battery life.

Embodiments of the present application provide an electrical apparatus using a battery as a power source. The electrical apparatus may be, but is not limited to, a mobile phone, a tablet, a laptop, an electric toy, an electric tool, a battery cart, an electric vehicle, a ship, a spacecraft, and the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For the convenience of description, the following embodiments are illustrated with an example in which the electrical apparatus according to an embodiment of the present application is a vehicle.

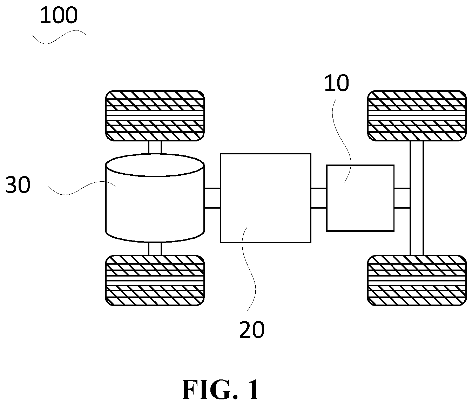

Refer to FIG. 1, which is a schematic structural view of a vehicle 100 provided in some embodiments of the present application. The vehicle 100 may be a fuel vehicle, a gas vehicle or a new energy vehicle. The new energy vehicle may be an all-electric vehicle, a hybrid vehicle, an extended-range vehicle, or the like. A battery 10 is provided at the bottom of the vehicle 100. The battery 10 may be used as a power supply for the vehicle 100, for example, the battery 10 may be used as an operating power source for the vehicle 100. The vehicle 100 may further include a controller 20 and a motor 30. The controller 20 is configured to control the battery 10 to supply power to the motor 30, for example, for the operation power demand for starting, navigation and driving of the vehicle 100.

In some embodiments of the present application, the battery 10 may not only be used as the operating power source for the vehicle 100, but also as a driving power source for the vehicle 100, to replace or partially replace fuel or natural gas to provide driving power for the vehicle 100.

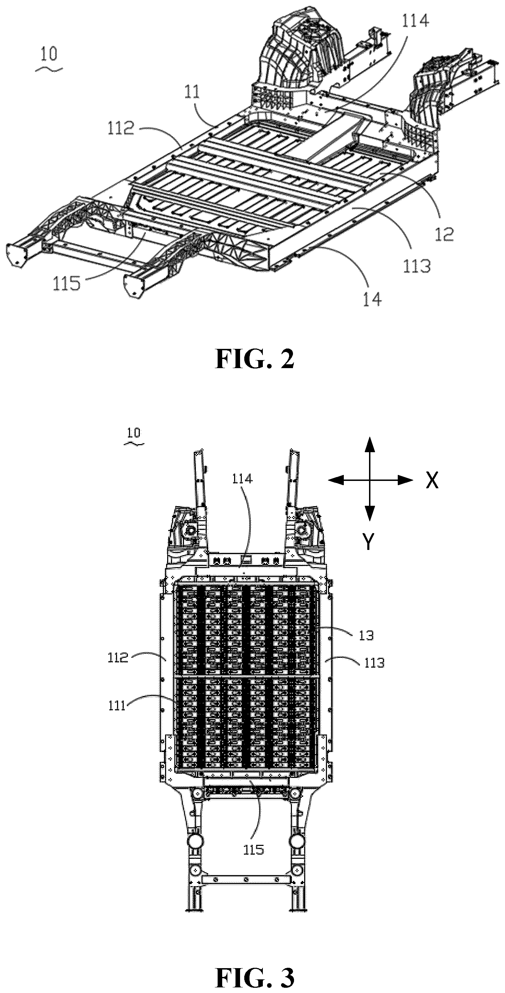

Referring to FIGS. 2 and 3, FIG. 2 is a schematic structural view of the battery 10 provided by some embodiments of the present application, and FIG. 3 is a top view of the battery 10 provided by some embodiments of the present application with the bearing body 12 removed. The battery 10 includes a frame body 11, a bearing body 12, and a battery unit 13. A hollow region 111 is formed in the internal structure of the frame body 11. The bearing body 12 is mated to the frame body 11. The battery unit 13 is arranged in the hollow region 111 and is spaced apart from the frame body 11. The battery unit 13 is arranged on one side of the bearing body 12 along the thickness direction of the frame body 11, and the battery unit 13 is connected to the bearing body 12.

The battery unit 13 includes a plurality of battery cells, all of which may be connected in series or parallel or series-parallel connection to form the battery unit 13. The series-parallel connection means that some of the plurality of battery cells are connected in series and some are connected in parallel. All the battery cells may be directly connected in series or parallel or in series-parallel connection, and then the battery unit 13 composed of the plurality of battery cells may be accommodated in the hollow region 111. Of course, the plurality of battery cells may first be connected in series or parallel or in series-parallel connection to constitute a form of battery module, and then a plurality of battery modules are connected in series, parallel, or in series-parallel connection to form a battery unit 13, which is accommodated in the hollow region 111.

The battery unit 13 may be arranged on the upper side of the bearing body 12, or alternatively the battery unit 13 may be arranged on the lower side of the bearing body 12. For example, the battery unit 13 is located on the lower side of the bearing body 12, and after the battery 10 is assembled, the bearing body 12 can also be used as the bottom plate of the chassis of the vehicle 100, and the body of the vehicle 100 is borne on the upper side of the bearing body 12 facing away from the battery unit 13.

The frame body 11 is a structure that has a certain space inside, which can be utilized to accommodate at least the battery unit 13. The shape of the frame body 11 may be designed in various ways, for example, the shape of the frame body 11 may be designed to be square, circular, elliptical, or the like.

The hollow region 111 refers to a space in the frame body 11 for at least accommodating the battery unit 13. The bearing body 12 may be located in the hollow region 111 or outside the hollow region 111. When the bearing body 12 is located in the hollow region 111, the hollow region 111 is divided by the bearing body 12 into a first area and a second area. The first area is located on the side of the bearing body 12 facing the battery unit 13 and is configured to accommodate the battery unit 13. The second area is located on the side of the bearing body 12 facing away from the battery unit 13 and is configured to accommodate components in the vehicle 100 other than the battery unit 13. When the bearing body 12 is located outside the hollow region 111, the hollow region 111 is only configured to accommodate the battery unit 13.

The bearing body 12 may be of a plate shape, a sheet shape, or other shapes. The battery unit 13 and the bearing body 12 may be connected by bonding, screwing, or other connection means.

In the present application, when the battery unit 13 is arranged in the hollow region 111, the bearing body 12 can limit and fix the battery unit 13 along the thickness direction of the frame body 11 to meet the requirements of assembly of the battery unit 13. In addition, the battery unit 13 is spaced apart from the frame body 11, which can greatly reduce the possibility of the battery unit 13 colliding with the frame body 11 and becoming deformed during transportation and use, thereby reducing the risk of deformation or even explosion of the battery unit 13, so that the battery 10 can have higher safety performance.

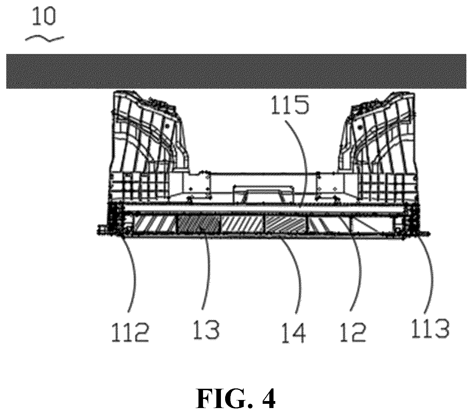

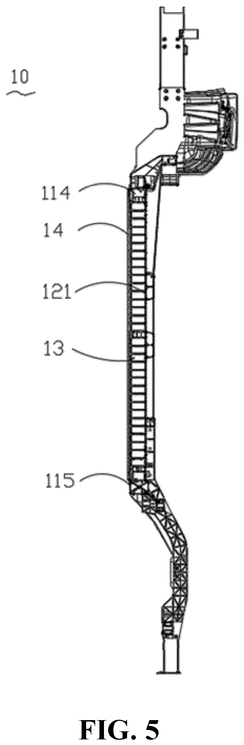

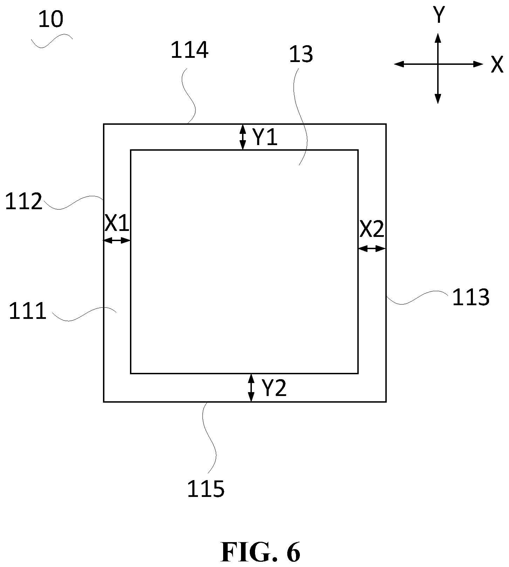

Referring to FIGS. 4, 5, and 6 together, FIG. 4 is a front sectional view of a battery 10 in an embodiment of the present application, FIG. 5 is a side sectional view of a battery 10 in an embodiment of the present application, and FIG. 6 is a schematic plan view of the frame body 11 in the battery mated to the battery 10 in some embodiments of the present application. In some embodiments of the present application, the frame body 11 includes a first longitudinal beam 112 and a second longitudinal beam 113 spaced apart along its width direction X, and a first transverse beam 114 and a second transverse beam 115 spaced apart along its length direction Y. The first longitudinal beam 112, the first transverse beam 114, the second longitudinal beam 113, and the second transverse beam 115 are connected end to end in sequence and enclosed to form the hollow region 111.

The first longitudinal beam 112 and the second longitudinal beam 113 both extend along the length direction Y of the frame body 11, the first transverse beam 114 and the second transverse beam 115 both extend along the width direction X of the frame body 11, and the first longitudinal beam 112, the first transverse beam 114, the second longitudinal beam 113, and the second transverse beam 115 are connected end to end in sequence and enclosed to form a rectangular hollow region 111.

Since the battery unit 13 is generally a cuboid or a cylinder, by providing the rectangular hollow region 111, the hollow region 111 can be fully utilized and the battery unit 13 of a greater volume can be arranged in the hollow region 111, so that the battery 10 can have higher space utilization.

In some embodiments of the application, the battery unit 13 is arranged between and spaced apart from the first longitudinal beam 112 and the second longitudinal beam 113, and the battery unit 13 is arranged between and spaced apart from the first transverse beam 114 and the second transverse beam 115.

With this design, collisions caused by relative movement between the battery unit 13 and the frame body 11 can be prevented, thereby ultimately achieving the aim of improved safety of the battery 10.

In some embodiments of the application, the distance between the battery unit 13 and the first transverse beam 114 is Y₁, and the distance between the battery unit 13 and the second transverse beam 115 is Y₂, Y₁ satisfies the condition: 30 mm ≤ Y₁ ≤250 mm, and/or Y₂ satisfies the condition: 30 mm ≤ Y₂ ≤250 mm.

For example, only Y₁ satisfies the condition: 30 mm ≤ Y₁ ≤ 250 mm; or, only Y₂ satisfies the condition: 30 mm ≤ Y₂ ≤ 250 mm; or, both Y₁ and Y₂ satisfy the conditions: 30 mm ≤ Y₁ ≤ 250 mm and 30 mm ≤ Y₂ ≤ 250 mm.

In such a range of distances, the battery unit 13 can be prevented from colliding with the first transverse beam 114 and/or the second transverse beam 115, so that the battery 10 has better safety.

In some embodiments of the application, Y₁satisfies the condition: 50 mm ≤ Y₁ ≤120 mm, and/or Y₂ satisfies the condition: 50 mm ≤ Y₂ ≤120 mm.

For example, only Y₁ satisfies the condition: 50 mm ≤ Y₁ ≤120 mm; or, only Y₂ satisfies the condition: 50 mm ≤ Y₂ ≤120 mm; or, both Y₁ and Y₂ satisfy the conditions: 50 mm ≤ Y₁ ≤120 mm and 50 mm ≤ Y₂ ≤ 120 mm.

In such a range of distances, the battery unit 13 can be prevented from colliding with the first transverse beam 114 and/or the second transverse beam 115, and the distance between the battery unit 13 and the first transverse beam 114 and/or the second transverse beam 115 is not too large, so that the battery 10 can have better space utilization and safety.

In some embodiments of the present application, the distance between the battery unit 13 and the first longitudinal beam 112 is X₁, and the distance between the battery unit 13 and the second longitudinal beam 113 is X₂, where X₁ satisfies the condition: 30 mm ≤ X₁ ≤120 mm, and/or X₂ satisfies the condition: 30 mm ≤ X₂ ≤120 mm.

For example, only X₁ may satisfy the condition: 30 mm ≤ X₁ ≤ 120 mm; or only X₂ may satisfy the condition: 30 mm ≤ X₂ ≤ 120 mm; or both X₁ and X₂ may satisfy the conditions: 30 mm ≤ X₁ ≤ 120 mm and 30 mm ≤ X₂ ≤ 120 mm.

In such a range of distances, the battery unit 13 can be prevented from colliding with the first longitudinal beam 112 and/or the second longitudinal beam 113, so that the battery 10 has better safety.

In some embodiments of the present application, X₁ satisfies the condition: 35 mm ≤ X₁ ≤ 80 mm, and/or X₂ satisfies the condition: 35 mm ≤ X₂ ≤ 80 mm.

For example, only X₁ satisfies the condition: 35 mm ≤ X₁ ≤ 80 mm; or, only X₂ satisfies the condition: 35 mm ≤ X₂ ≤ 80 mm; or, both X₁ and X₂ satisfy the conditions: 35 mm ≤ X₁ ≤ 80 mm and 35 mm ≤ X₂ ≤ 80 mm.

In such a range of distances, the battery unit 13 can be prevented from colliding with the first longitudinal beam 112 and/or the second longitudinal beam 113, and the distance between the battery unit 13 and the first longitudinal beam 112 and/or the second longitudinal beam 113 is not too large, so that the battery 10 can have better space utilization and safety.

Refer to FIGS. 4 and 5 again. In some embodiments of the present application, the battery 10 further includes a cover body 14 connected to the frame body 11, and the cover body 14 is arranged on the side of the battery unit 13 facing away from the bearing body 12. The bearing body 12 has a bearing surface 121 facing the battery unit 13, and the projection of the cover body 14 on the bearing surface 121 at least partially covers the projection of the battery unit 13 on the bearing surface 121.

Specifically, the cover body 14 is arranged below the battery unit 13.

The cover body 14 may be of a plate-like shape, a sheet-like shape or other shapes. The cover body 14 and the frame body 11 may be connected by means of buckles, pins, screws, or the like.

By setting the projection of the cover body 14 on the bearing surface 121 to at least partially cover the projection of the battery unit 13 on the bearing surface 121, the cover body 14 can be located below the battery unit 13 and seal at least part of the hollow region 111, thereby helping to reduce the interference with the battery unit 13 from the external environment where the battery 10 is located.

In some embodiments of the present application, the projection of the cover body 14 on the bearing surface 121 completely covers the projection of the battery unit 13 on the bearing surface 121.

In this way, the cover body 14 can further reduce the interference with the battery unit 13 from the external environment where the battery 10 is located.

In some embodiments of the present application, the cover body 14 cooperates with the bearing body 12 and is configured to seal the battery unit 13 within the hollow region 111.

That is, the frame body 11, the bearing body 12, and the cover body 14 cooperate with each other and can seal the battery unit 13 within the hollow region 111.

The battery unit 13 sealed within the hollow region 111 cannot come into contact with water vapor, air, and other substances in the external environment, thereby preventing interference with the operation of the battery unit 13 from the external environment, so that the battery unit 13 can have better operating reliability and service life.

According to some embodiments of the present application, the present application further provides an electrical apparatus including the battery 10 described in any one of the above solutions, and the battery 10 is configured to provide electric energy for the electrical apparatus.

The electrical apparatus may be any one of the aforementioned devices or systems in which the battery 10 is applied.

According to some embodiments of the present application, referring to FIGS. 2 to 5, the present application provides a battery 10, which includes a frame body 11, a cover body 14, a bearing body 12, and a battery unit 13 connected to the bearing body 12. A hollow region 111 is formed in the internal structure of the frame body 11, the battery unit 13 is arranged in the hollow region 111, the bearing body 12 and the cover body 14 are both connected to the frame body 11, and the cover body 14 and the bearing body 12 are spaced apart along the thickness direction of the frame body 11 at the lower and upper sides of the battery unit 13 opposite to each other, and cooperate to seal the battery unit 13 within the hollow region 111. The frame body 11 includes a first longitudinal beam 112 and a second longitudinal beam 113 spaced apart along its width direction X, and a first transverse beam 114 and a second transverse beam 115 spaced apart along its length direction Y. The first longitudinal beam 112, the first transverse beam 114, the second longitudinal beam 113, and the second transverse beam 115 are connected end to end in sequence and enclosed to form the hollow region 111. The battery unit 13 is arranged between and spaced apart from the first longitudinal beam 112 and the second longitudinal beam 113, and is arranged between and spaced apart from the first transverse beam 114 and the second transverse beam 115.

When the battery unit 13 is arranged in the hollow region 111, the bearing body 12 can limit and fix the battery unit 13 along the thickness direction of the frame body 11 to meet the requirements of assembly of the battery unit 13. In addition, since the battery unit 13 is spaced apart from the first longitudinal beam 112, the second longitudinal beam 113, the first transverse beam 114, and the second transverse beam 115, during the transportation or use of the battery 10, even if there is relative movement between the frame body 11 and the battery unit 13, no collision will occur between the battery unit 13 and the first longitudinal beam 112, the second longitudinal beam 113, the first transverse beam 114, and the second transverse beam 115, thereby preventing deformation of the frame body 11 or the battery unit 13, and consequently improving the safety of the battery 10.

The cover body 14 and the bearing body 12 cooperate to seal the battery unit 13 within the hollow region 111. The battery unit 13 sealed within the hollow region 111 cannot come into contact with water vapor, air, and other substances in the external environment, thereby preventing interference with the operation of the battery unit 13 from the external environment, so that the battery unit 13 can have better operating reliability and service life.

The technical features of the above-mentioned embodiments can be combined arbitrarily. In order to make the description concise, not all possible combinations of the technical features in the above embodiments are described. However, all the combinations of the technical features should be considered as falling within the scope described in the specification provided that they do not conflict with each other.

The above-mentioned embodiments only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the scope of protection of the present application. Therefore, the scope of protection of the present patent application shall be subject to the appended claims.

## Claims

1. A battery, the battery comprising:
a frame body (11), a hollow region (111) being formed in an internal structure of the frame body;
a bearing body (12) mated to the frame body (11); and
a battery unit (13) arranged in the hollow region (111) and spaced apart from the frame body (11), the battery unit (13) being arranged on one side of the bearing body (12) along a thickness direction of the frame body (11), and the battery unit (13) being connected to the bearing body (12).

2. The battery according to claim 1, wherein the frame body (11) comprises a first longitudinal beam (112) and a second longitudinal beam (113) spaced apart along its width direction (X), and a first transverse beam (114) and a second transverse beam (115) spaced apart along its length direction (Y), and the first longitudinal beam (112), the first transverse beam (114), the second longitudinal beam (113), and the second transverse beam (115) are connected end to end in sequence and enclosed to form the hollow region (111).

3. The battery according to claim 2, wherein the battery unit (13) is arranged between and spaced apart from the first longitudinal beam (112) and the second longitudinal beam (113), and the battery unit (13) is arranged between and spaced apart from the first transverse beam (114) and the second transverse beam (115).

4. The battery according to claim 3, wherein a distance between the battery unit (13) and the first transverse beam (114) is Y₁, and a distance between the battery unit (13) and the second transverse beam (115) is Y₂, Y₁ satisfies the condition: 30 mm ≤ Y₁ ≤ 250 mm, and/or Y₂ satisfies the condition: 30 mm ≤ Y₂ ≤ 250 mm.

5. The battery according to claim 4, wherein Y₁ satisfies the condition: 50 mm ≤ Y₁ ≤ 120 mm, and/or Y₂ satisfies the condition: 50 mm ≤ Y₂ ≤ 120 mm.

6. The battery according to claim 3, wherein a distance between the battery unit (13) and the first longitudinal beam (112) is X₁, and a distance between the battery unit (13) and the second longitudinal beam (113) is X₂, where X₁ satisfies the condition: 30 mm ≤ X₁ ≤120 mm, and/or X₂ satisfies the condition: 30 mm ≤X₂ ≤120 mm.

7. The battery according to claim 6, where X₁ satisfies the condition: 35 mm ≤ X₁ ≤80 mm, and/or X₂ satisfies the condition: 35 mm ≤X₂ ≤80 mm.

8. The battery according to any one of claims 1 to 7, further comprising a cover body (14) connected to the frame body (11), wherein the cover body (14) is arranged on the side of the battery unit (13) facing away from the bearing body (12);
the bearing body (12) has a bearing surface (121) facing the battery unit (13), and a projection of the cover body (14) on the bearing surface (121) at least partially covers a projection of the battery unit (13) on the bearing surface (121).

9. The battery according to claim 8, wherein the projection of the cover body (14) on the bearing surface (121) completely covers the projection of the battery unit (13) on the bearing surface (121).

10. The battery according to claim 9, wherein the cover body (14) cooperates with the bearing body (12) and is configured to seal the battery unit (13) within the hollow region (111).

11. An electrical apparatus, comprising a battery according to any one of claims 1 to 10, wherein the battery is configured to provide electrical energy for the electrical apparatus.
